# EUROPEAN PATENT APPLICATION

(11) **EP 4 714 714 A1**
(43) Date of publication of application: **25.03.2026**
(21) Application number: 24201451.2
(22) Date of filing: 19.09.2024
(51) Int. Cl.: B60L 3/00

(54) **METHOD FOR CONTROLLING AN ENERGY SYSTEM IN A VEHICLE**

(71) Applicant: Volvo Truck Corporation, 405 08 Göteborg (SE)
(72) Inventor: RAY, Dripta, 412 76 GÖTEBORG (SE); LILLMAA, Henri, 463 72 LÖDÖSE (SE)
(74) Representative: Ström & Gulliksson AB

(57) **Abstract**

A computer system comprising processing circuitry is provided. The processing circuitry is configured to obtain amplitude values of electrical current (70) from at least one energy storage system (40) of a vehicle (10), determine a rate of change of the current (72) at least based on said values of electrical current (70), obtain vehicle data (50), obtain reference data (71) based on said vehicle data (50), determine load characterization data (74) based on the determined current rate change (72) and the reference data (50), and control the opening of a switching device (35) of the energy storage system (40) based on said determined load characterization data (74).

## Description

### TECHNICAL FIELD

The disclosure relates generally to an energy system in a vehicle. In particular aspects, the disclosure relates to a computer-implemented method of controlling an energy system in a vehicle. The disclosure can be applied to electric heavy-duty vehicles, such as electric trucks, electric buses, and electric construction equipment, among other vehicle types. The disclosure may further be applied in construction equipment vehicles, such aps excavators, loaders and articulated haulers. The disclosure could further be applied to marine vehicles, such as a marine vessel, such as water crafts, motorboats, sport vessels, sailboats, boats, ships among other vessel types. The disclosure can be used in autonomous vehicles, as well as in driver controlled vehicles. Although the disclosure may be described with respect to a particular vehicle, the disclosure is not restricted to any particular vehicle.

### BACKGROUND

Vehicles are normally equipped with one or more sub-systems requiring electrical power. In modern vehicles these electric sub-systems are typically propulsion systems whereby the vehicle is either an electrically driven vehicle (i.e. a fully electric vehicle) or a hybrid vehicle (i.e. the driving force is either provided by an electric motor, an internal combustion engine, or both). Within the context of this disclosure, both types are considered being electric vehicles.

Battery energy storage systems are installed in the vehicle in order to provide the required electrical energy to the one or more electrical motors. The battery energy storage system of a modern vehicle typically comprises one battery pack, however a plurality of battery packs may be used in some applications. Each battery pack comprises a plurality of battery modules, and each battery module comprises a plurality of battery cells.

A battery management system is normally connected to the one or more battery packs in order to control energy flow to and from the battery cells. Modern battery management systems are typically also configured to monitor the battery cells in order to determine how much life the battery cells have remaining.

Batteries are sensitive to failure events, such as overcurrent due to short circuit or over discharge due to not following the power limits of the system. This is generally controlled using pyro fuses or melting fuses.

Based on above, there is a need for improved solutions for battery management systems and methods providing improved failure control of the associated energy system.

### SUMMARY

In prior art systems, pyro fuse or melting fuses are used for protecting against over current in a high voltage battery. In a situation where melting fuses are used, the metal within the fuse melts and thereby the high voltage circuit is broken when the current exceeds certain threshold. In a situation of pyro technical fuse, the conductor in the fuse is mechanically broken with the help of pyro technical device when the current exceeds certain threshold. In either case the main reactivity of breaking the high voltage circuit is upon the current reaches and exceeds a certain threshold. That means potentially useful mikro- and/or milliseconds in case of failure are lost due to time taken for the current to reach the fault reaction threshold. The present inventors have found a way to provide an earlier detection of possible overcurrent.

According to a first aspect of the disclosure, a computer system comprising processing circuitry configured to obtain amplitude values of electrical current from at least one energy storage system of a vehicle, determine a rate of change of the current at least based on said values of electrical current, obtain vehicle data, obtain reference data based on said vehicle data, determine load characterization data based on the determined current rate change and the reference data, and control the opening of a switching device of the energy storage system based on said determined load characterization data. The first aspect of the disclosure may seek to find earlier detection of possible overcurrent. A technical benefit may include determining a load characterization data that predicts if the energy storage system is close to overcurrent. In this way, it may be sufficient to control the opening of the switching device in order to prevent overcurrent i.e., in some situations the fuse does not have to be activated. That in turn could lead to less wear on the cells as they are not subjected to high currents as well as avoiding necessity for replacing the fuse. Moreover, this could avoid repair and/or replacement of the energy storage system as the fuse was not activated.

A further technical effect may include that the energy storage system, such as a battery pack, could avoid repair and replacement. In some situations, as the fuse has some delay between current exceeding the trigger threshold until the fuse breaks the circuit, the cells could be damaged by the high frequency. This is avoided with the disclosed method. Optionally in some examples, including in at least one preferred example, the processing circuitry is further configured to determine, based on the determined load characterization data, a predicted failure event, and open the switching device upon determining the predicted failure event.

Optionally in some examples, including in at least one preferred example, the determination of a rate of change of the current is further based on predictive data. A technical benefit may include that the prediction is further improved.

Optionally in some examples, including in at least one preferred example, the vehicle data comprises a vehicle operation mode. A technical benefit may include that the prediction is further improved, as it can take account for different vehicle operation modes.

Optionally in some examples, including in at least one preferred example, the vehicle operation mode is one of: driving mode, charging mode or preparation mode. A technical benefit may include that the prediction is further improved, as it can take account for different vehicle operation modes.

Optionally in some examples, including in at least one preferred example, the vehicle data comprises the type of vehicle. A technical benefit may include that the prediction is further improved, as it can take account for different types of vehicles and its associated characteristics.

Optionally in some examples, including in at least one preferred example, the vehicle data comprises driving information of the vehicle. A technical benefit may include that the prediction is further improved, as it can take account for driving information and its associated characteristics.

Optionally in some examples, including in at least one preferred example, the processing circuitry is configured to: determine the load characterization data by comparing the change of the current with reference data. A technical benefit may include that the prediction is further improved.

Optionally in some examples, including in at least one preferred example, the amplitude values of electrical current are obtained from at least one high sampling rate current sensor. A technical benefit may include that the sensor is capable of capturing data with a very high sampling rate, thus providing a better determination of the load characterization data.

Optionally in some examples, including in at least one preferred example, the processing circuitry is configured to determine a rate of change of the current when the electrical current is below an overcurrent threshold. A technical benefit may include that the rate of change of current only is measured in the operating condition.

According to a second aspect of the disclosure, a vehicle comprising the computer system of the first aspect is provided.

Optionally in some examples, including in at least one preferred example, further comprising at least one high sampling rate current sensor.

According to a third aspect of the disclosure, a computer-implemented method is provided. The method comprising: obtaining, by processing circuitry of a computer system, amplitude values of electrical current from at least one energy storage system of a vehicle, determining, by the processing circuitry, a rate of change of the current at least based on said values of electrical current, obtaining, by the processing circuitry, vehicle data, obtaining, by the processing circuitry, reference data based on said vehicle data, determining, by the processing circuitry, load characterization data based on the determined current rate change and the reference data; and controlling, by the processing circuitry, the opening of a switching device of the energy storage system based on said determined load characterization data.

Optionally in some examples, including in at least one preferred example, further comprising determining, based on the determined load characterization data, a predicted failure event, and opening the switching device upon determining the predicted failure event.

Optionally in some examples, including in at least one preferred example, further comprising determining, based on the determined load characterization data, a predicted failure event, and opening of the switching device upon determining the predicted failure event.

According to a fourth aspect of the disclosure, a computer program product comprising program code for performing, when executed by the processing circuitry, the method of the third aspect.

According to a fifth aspect of the disclosure, a non-transitory computer-readable storage medium comprising instructions, which when executed by the processing circuitry, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary view of a vehicle according to an example.
**FIG. 2** is a schematic view of a system according to an example.
**FIG. 3** is a graph of current over time according to an example.
**FIG. 4** is an exemplary system diagram of functionality of a computer system.
**FIG. 5** is an exemplary system diagram of functionality of a computer system.
**FIG. 6** is a flow chart of an exemplary method according to an example.
**FIG. 7** is a flow chart of an exemplary method according to an example.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

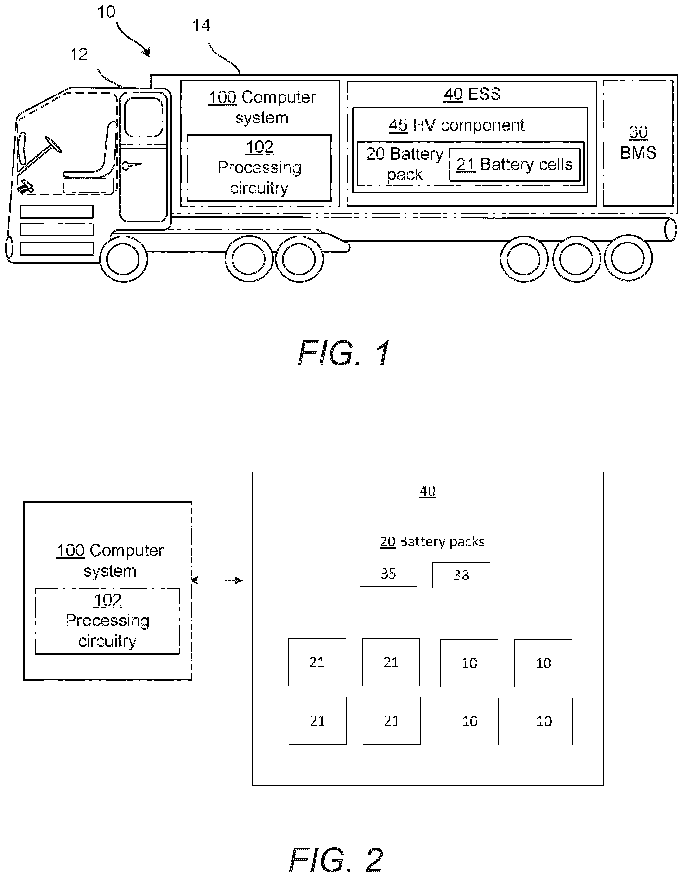

**FIG. 1** is an exemplary schematic illustration of a vehicle **10.** The vehicle **10** is illustrated as a heavy-duty vehicle, in this case a truck. The vehicle **10** is preferably an electric vehicle. In other areas of application other machines typically employing battery systems can be envisaged, such as for buses, marine vessels, construction equipment, personal vehicles, among other areas of application. The vehicle **10** comprises a tractor unit **12** which is arranged to tow a trailer unit **14.** While not explicitly shown, the vehicle **10** includes vehicle units and associated functionality as would be understood and expected by a skilled person, such as a powertrain, chassis, and various control systems.

The vehicle **10** comprises an energy storage system, ESS **40.** The ESS **40** is arranged to store electrical energy and release it as needed. The ESS **30**comprises a high-voltage, HV, component **45.** The HV component **45** is a relative term, and what is considered high voltage may depend on the context. In applicable power systems discussed herein, high voltage typically refers to voltages higher than the standard residential or commercial power distribution levels. Purely by way of example, voltage levels for HV components in traction batteries or fuel cell systems typically range between 200 V and 800 V or more, in DC fast chargers between 600 V and 1000 V, in HEV (Hybrid Electric Vehicles) between 200 and 300 V. The skilled person will appreciate that the voltage level for the HV component **45** is readily adaptable for other HV application areas.

The HV component **45** comprises a plurality of battery packs **20,** each battery pack **20** having a set of battery cells **21** responsible for storing energy in chemical form. When chemical reactions occur electrical energy is harnessed for various application. The battery cell **21** is the fundamental building block of a battery, comprising an anode, cathode, and electrolyte. Multiple battery cells **21** are combined to create a battery pack **21,** a modular unit that delivers voltage, capacity, and power for diverse applications. The battery packs **20** may include lithium-ion batteries, lithium iron phosphate batteries, solid-state batteries, graphene batteries, sodium-ion batteries, nickel-cobalt-manganese batteries, aluminum-ion batteries, or other battery types known in the art. The battery packs **20** are rechargeable and adapted to provide a source of electricity for an electric propulsion system (not shown). During charging, electricity from an external power source is used to replenish the energy stored in the battery packs **20,** the external power source typically being Electric Vehicle Supply Equipment (EVSE). EVSE refers to the infrastructure, commonly known as a charging station or charging point, that supplies electric energy for recharging the battery packs **20.** The stored electrical energy is then made available for the electric propulsion system or other power-consuming components, systems or subsystems of the vehicle **10.**

The battery pack **20** comprises one or more controllable loads, the controllable loads represent devices or systems that draw electrical power from the output of the battery pack, such as a heater device, chiller device, electric machine, or practically any other device or auxiliary load having an electric output that can be controlled (e.g. increased or decreased).

The vehicle **10** comprises a battery management system, BMS **30,** operating in tandem with the ESS **40** by monitoring and managing the individual battery cells **21** within the battery packs **20.** Typically, each battery pack **20** is associated with a BMS controller. Alternatively, the BMS **30** may include a master controller configured to monitor and manage a plurality of battery packs **20.** The BMS **30** ensures balanced charging and discharging, prevents overcharging or over-discharging, manages temperature, and optimizes overall performance and safety. The BMS may be configured to monitor and control the battery energy storage system **40** based on driver requests and vehicle operation specifics.

The vehicle **10** comprises a computer system **100** having processing circuitry **102.** Further shown in **FIG. 2** is the processing circuitry **102,** which is merely for illustrative purposes shown in conjunction with the battery pack **20.** It shall however be understood that this is typically not the case, as the functionality of the processing circuitry **102** is typically implemented as a more central controller depending on the area of application, such as in a central computer system **100** of a vehicle **10.** In any event, the processing circuitry **102** is configured to cause various control actions with respect to components of the battery pack **20.**

The battery management system **30** may comprise one or more sensors in order to evaluate the status of the battery cells **21,** packs **20** and/or the energy storage system **40.** The battery management system **30** preferably uses the one or more sensors to monitor various parameters, such as voltage, current, temperature and state of charge. The one or more sensor may for example be at least one battery cell temperature sensor. The battery cell temperature sensor is preferably arranged in direct contact with a battery cell **21** and is connected to the battery management system **30** such that sensor signals, representing the actual battery temperature of at least one battery cell **21,** are received by the battery management system **30.** The battery management system **30** may further comprise an ambient temperature sensor arranged remote from the battery cells **21,** such as at an exterior side of the battery pack **20.** In one example, the battery management system **30** comprises at least one high sampling rate current sensor **38.** This is illustrated in **FIG. 2****.**

**FIG. 2** further illustrates at least one switching device **35.** The switching device **35** is an electrically controlled switch used for switching an electrical power circuit. The at least one switching device is designed to be connected to high-current load devices. The switching device **35** is configured to rapidly disconnect the battery pack from the electrical system in case of failure or damages to the system, for example short circuit, overcurrent or any other fault that could lead to overheating. The switching device **35** is preferably controlled by the battery management system **30.** The control of the switching device may be based on the information received by the battery management system **30.** In the present example, the at least one switching device **35** is arranged at the level of the battery pack **20.** In one example, the switching device comprises at least one high-voltage solid-state switch. In one example, the switching device comprises a high-voltage contactor. In one example the switching device is a breaker. As a mere example, the switching device may comprise or be a MOSFET, SCR Thyristor, a MCT Thyristor or a general purpose IGBT.

**FIG. 2** further illustrates at least one fuse **38.** The fuse **38** may be a pyrotechnic fuse **38** (also referred to as pyro fuse) or a conventional fuse **38** (also referred to as melting fuse). A pyrotechnic fuse **38** rapidly disconnects the battery pack from the vehicle's electrical system in the event of a severe fault, such as a crash, short circuit, overheating, overcurrent or another critical situation. The pyro fuse **38** contains a pyrotechnic device that, when triggered, generates a small explosion. This explosion forces a mechanical element, such as a cutter or piston, to physically break the electrical circuit by severing the connection between the battery and the rest of the vehicle's high-voltage system. A melting fuse **38** contains a metal wire or strip that melts when too much current flows through it. This melting action breaks the circuit, stopping the flow of electricity and protecting the system from overheating, short circuits, or other electrical faults. In one example, the fuse **38** is arranged between the battery pack and a switching device **35.** In one example, the fuse **38** is arranged close to the individual battery modules within the battery pack.

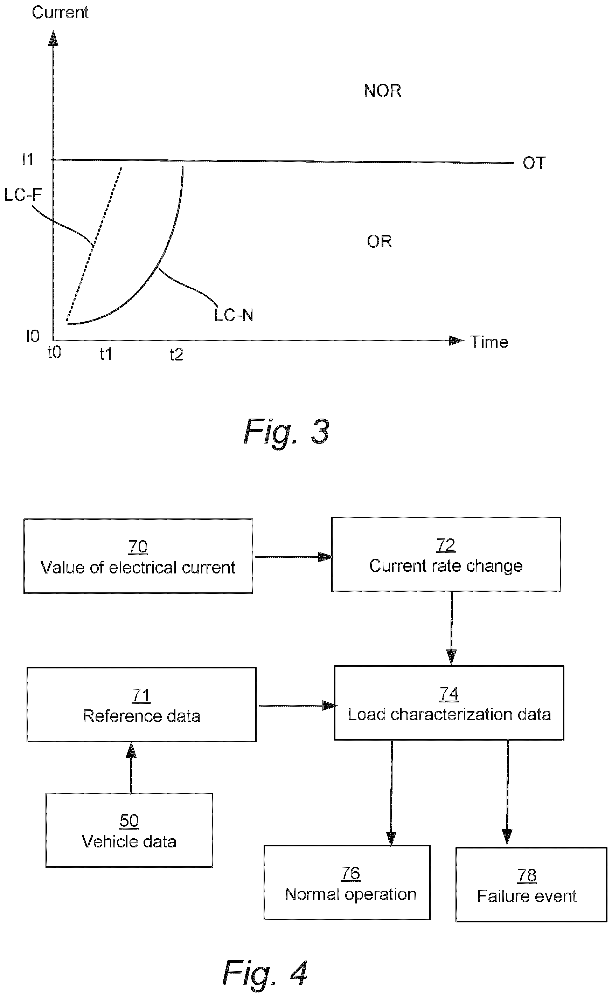

**FIG. 3** is a schematic graph of a relationship of current over time according to one example. The graph illustrates an operational region **OR** of the battery pack. The operational region **OR** is below an overcurrent threshold **OT.** The graph further illustrates a non-operational region **NOR.** The non-operational region **NOR** may be seen as a fuse operating area. The non-operational region **NOR** of the battery is above the overcurrent threshold **OT.** In this example, the overcurrent threshold **OT** is arranged at a first current level **I1.** In one example, upon exceeding the first current level **I1** the switching device is configured to protect the batteries form overcurrent by breaking the circuit and/or conductor. As previously been discussed, this may be achieved by melting the fuse and thereby breake the circuit or by pyro technical fuse that mechanically breakes the conductor.

The dotted graph **LC-F** represent a typical scenario of a load characteristics of failure. The graph **LC-N** represent a typical scenario of a load characteristics under nominal usage. The graphs represent the current change over time. The aim of the present invention is to establish if the current readings are indicative of failure. Hence, the computer system is configured to determine load characterization data that indicates if the overcurrent threshold **OT** will be reached.

Now turning to **FIG. 4****.** The computer system **700** is configured to obtain a value of electrical current **70** from at least one energy storage system **40** of the vehicle **10.** The value is preferably a value within the operational region **OR.** Hence, the value is preferably a value below the first current level **I1.** The value is preferably an amplitude value.

The computer system **700** is further configured to determine a current rate change **72** at least based on said value(s) of electrical current **70.** The current rate change **72** is a value of the current over time. The current rate change **72** may also be seen as the slope of the curve shown in **FIG. 3****.** The current rate change **72** may be based both on current readings and predictive values, or only on measured current readings. In one example, the current rate change **72** is based on at least two measured current values **70.** In one example, the current rate change **72** is based on at least two measured current values in combination with predictive values. The current readings may capture information pertaining from the electric motor having certain torque and load current characteristics. Typically, a higher current rate change **72** than is expected is indicative of a failure of the energy storage system of some kind.

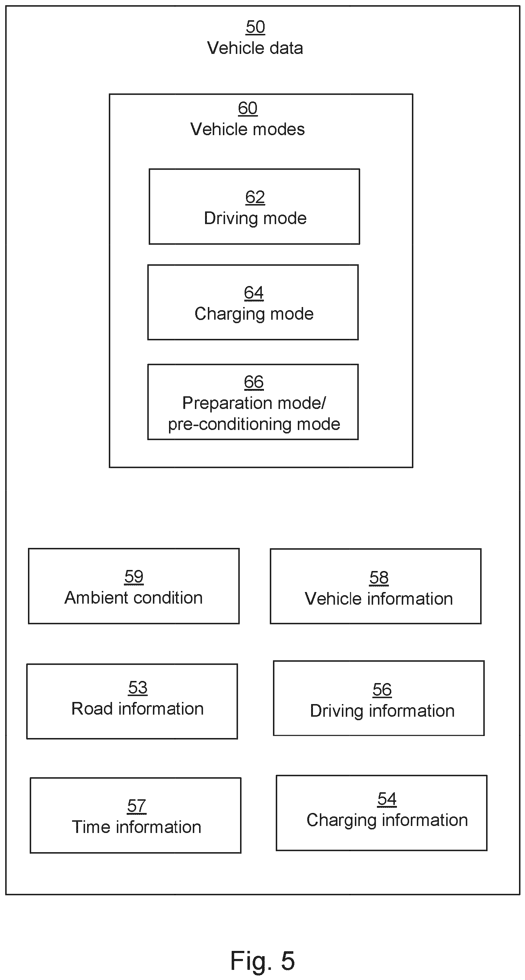

The computer system **700** may further be configured to obtain reference data **71.** The reference data **71** is dependent on or associated with vehicle data **50.** In one example, the computer system **700** may further be configured to obtain vehicle data **50** and associated reference data **71.** In one example, the computer system **700** is configured to obtain vehicle data **50** and obtain reference data **71** based on said vehicle data **50.** Vehicle data **50** will be discussed more in detail with reference to **FIG. 5****.**

The computer system **700** is further configured to determine load characterization data **74** based on the determined current rate change **72** and the reference data **71** being associated with vehicle data **50.** In one example, the load characterization data **74** is determined by comparing the change of the current **72** with reference data **71.**

Based on the determined load characterization data **74,** the computer system **700** is further configured to control the opening of at least one switching device **35** of the energy storage system **40.** The load characterization data **74** is used to determine if the current rate change **72** is due to nominal operation **76** or if it is indicating a failure event **78.** A failure event **78** may for example be due to overcurrent due to short circuit or over discharge due to not following the power limits from the battery pack/battery management system. In one example, a failure event is a short circuit in the high voltage harness and/or the high voltage load(s) and/or high voltage charger.

In one example, the computer system **700** is configured to determine a predicted failure event **78** based on the determined load characterization data **74.** Upon determining a predicted failure event **78,** the switching device **35** is opened. In this way, failure of the system is minimized or prevented. By opening the switching device **35** before the current exceeds the overcurrent threshold **OT,** no permanent damages of the switching device (s) occur.

Turning to **FIG. 5****,** examples of vehicle data **50** are illustrated. Vehicle data **50** may comprise different kinds of information, or parameters, directly or indirectly relating to the operation of the vehicle **10.** In one example, the vehicle data **50** comprises vehicle operation modes **60.** The vehicle modes **60** may be one of: driving mode **62,** charging mode **64** and preparation/pre-conditioning mode **66.**

The driving mode **62** may refer to the operational state of the vehicle in which the propulsion system is actively engaged to provide motive power for vehicle movement. During driving mode, auxiliary systems may be activated. Such auxiliary systems may for example include climate control and infotainment.

Further, the driving mode **62** may comprise driving information **56.** The driving information **56** may comprise information relating to driving pattern. In one example, the driving pattern may relate to the time that the vehicle is in a driving mode. As an example, the driving pattern may relate to information such as that the vehicle has been in a driving mode for 8 consecutive hours, or that it has been in a driving mode for more than 6 hours for 5 consecutive days.

In yet one example, the driving information **56** may comprise information relating to one or more of: number of sudden accelerations of the vehicle **10,** number of sudden decelerations of the vehicle **10,** frequency of sudden accelerations of the vehicle **10,** frequency of sudden decelerations of the vehicle **10,** sudden stop of the vehicle **10,** speed of the vehicle **10,** use of regenerative braking functionalities, and use of cruise control functionalities. Furthermore, the driving information **56** may comprise information relating to the use of air-condition, and other similar features of the vehicle **10.**

The charging mode **64** may refer to the state in which the vehicle is stationary and connected to an external power source for the purpose of recharging the energy storage system. The charging mode may involve several sub-modes, including but not limited to fast charging, slow charging, and balanced charging.

The pre-conditioning mode **66** may refer to a preparatory state in which the vehicle adjusts the conditions of the energy storage system and/or the cabin environment prior to vehicle operation. This mode may be initiated autonomously by the vehicle or manually by the user, either remotely or directly. When pre-conditioning mode is activated, the battery management system may selectively activate heating or cooling mechanisms within the battery pack to bring the battery cells to an optimal operating temperature. This ensures maximum efficiency and performance during subsequent vehicle operation. Concurrently, or as a separate function, the climate control system may be engaged to adjust the cabin temperature to a user-defined setpoint. The pre-conditioning process may be governed by real-time data, such as ambient temperature, departure time, and battery SOC, to enhance vehicle readiness and user comfort.

Vehicle data **50** may further relate to vehicle information **58.** The vehicle information **58** may for example relate to the weight of the vehicle, the type of vehicle, and/or energy consumption of the vehicle. The weight of the vehicle may be a measured value (such as measured in tons or kilos) and/or information relating to the load of the vehicle (fully loaded, half-loaded or no goods). Vehicle information **58** may be received by different sensors arranged on the vehicle, such as weight sensors.

The vehicle data **50** may comprise information relating to the ambient condition **59** of the vehicle. The ambient condition **59** may for example be humidity, temperature and/or precipitation. The humidity may be a current value, a historical value and/or a prediction of upcoming humidity based on weather data. The humidity may account for fog and mist and may also be referred to as moisture. The temperature may be the temperature of the road and/or the temperature surrounding the vehicle. The temperature may be a current value, a historical value and/or an estimation of upcoming temperature based on weather data. Precipitation may for example be rain, drizzle, sleet, snow, ice pellets, graupel and hail. The precipitation may be a current value, a historical value and/or an estimation of upcoming precipitation based on weather data.

The vehicle data **50** may comprise information relating to time **57.** The time may relate to the time of year, such as the month of the year or the season of the year (spring, summer, autumn, winter). The time of year may affect the precipitation, the outdoor temperature, atmospheric humidity and road salting. The time may further relate to the time of the day, such as a specific time or time range (morning, midday/noon, afternoon evening, night). The time of day may affect the precipitation, outdoor temperature and atmospheric humidity.

The vehicle data **50** may comprise information relating to charging information **54** of the one or more battery cells **10,** battery modules **20** or battery packs **30** of the vehicle **10.** Charging information **54** may comprise information of previous charging time, previous charging power, expected upcoming charging time, expected upcoming charging time, and/or current charging status. The charging information **54** may include information of how many times the battery is charged within a predetermined time. The charging information **54** may further include the amount of energy at the start of charging the battery. The charging information **54** may include information relating to the charging mode such as a quick charging mode, normal charging mode, or slow charging mode.

The vehicle data **50** may comprise information relating to road information **53.** The road information may pertain to the road on which the vehicle is currently travelling on, roads that the vehicle **10** has been travelling on and/or road that the vehicle will travel on in the planned route. The road information **53** may for example relate to road inclination, temperature of the road, shape of the road, and/or surface of the road. The road inclination **53** may comprise information of upcoming changes in inclination of the road, for example if the inclination will be negative or positive, the maximum amount of inclination, a mean value of the inclination and/or the length of the inclination. The road inclination is preferably received from a navigation service. The temperature of the road preferably relates to temperature at a given location that the vehicle **10** has travelled. The temperature is preferably received from a weather forecast. The surface of the road may for example relate to the road surface roughness and/or road surface classification (gravel road, dirt road, asphalt road, etc.) of the road of the travelled route. The road surface may be uneven for many reasons, for example due to eroding roads, potholes, gravel road, dirt road, large water puddles on the road, ice and snow on the road, or oil spill on the road. The road surface information is preferably received from a navigation service. The road surface information may additionally or alternatively be received from one or more sensors arranged on the vehicle.

As already been described, the vehicle data **50** may comprise information relating to statistical data and/or historical data. The statistical data and historical data may for example relate to previous driving information, vehicle information and/or road information. This information could be combined or used alone. As an example, the statistical data and historical data may relate to previous brake events for a given route, previous brake events for a given weight of the vehicle, previous brake events for a given speed of the vehicle, previous brake events for a given road inclination, and previous brake events for a given road information.

The vehicle data **50** may be obtained from the vehicle **10** or from an external processing circuitry, such as a cloud-based system.

The different vehicle data **50** may be analyzed separately or in combination with one another. The vehicle data **50** may be seen as vehicle parameters. The vehicle data **50** may be used to create different use cases. For example, one use case could comprise information relating to road information and driving pattern, whereas another use case comprises information relating to the type of vehicle and the weight of the load. As previously mentioned, the vehicle data **50** is associated with reference data **71.** The different use cases will be associated with different reference data **71.**

In one example, the reference data **71** is updated continually over time. The reference data **71** may for example be updated based on statistical or historical events.

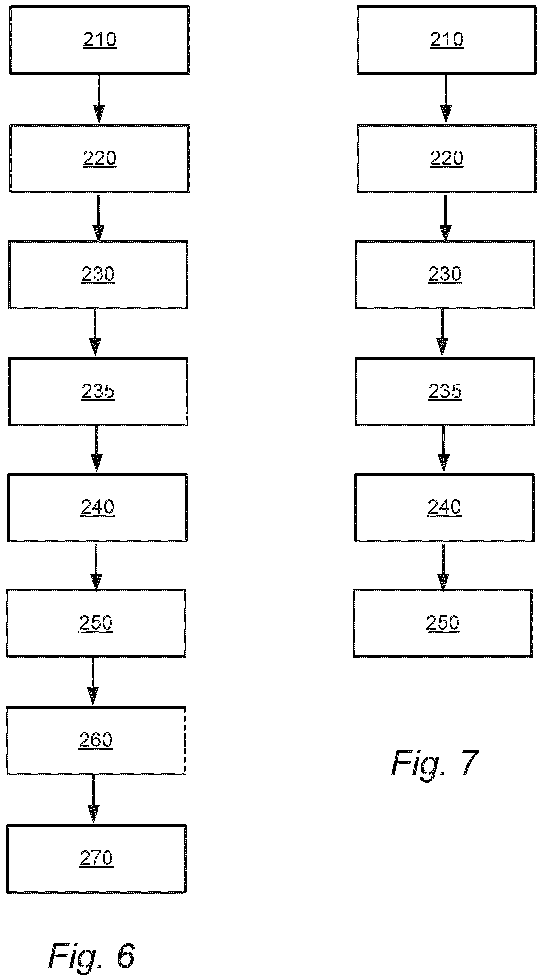

**FIG. 6** is a flow chart of a method according to one example. The method comprises obtaining **210** amplitude values of electrical current **70** from at least one energy storage system **40** of a vehicle **10.** The amplitude values of electrical current may be retrieved from one or more sensors. The sensor may be a high sampling rate current sensor **38.**

In one example, the method further comprises to compare the amplitude value of electrical current against an overcurrent threshold **OT.** Upon determining that the amplitude value is below the overcurrent threshold **OT,** the method proceeds with the below steps. However, in this example, if it is determined that the value is above the overcurrent threshold OT, the fuse of the connector should already have been activated and the process is terminated.

The method further comprises determining **220** a rate of change of the current **72.** The determination may be based at least on the determined values of electrical current **70.**

The method further comprises obtaining **230** vehicle data **50,** and obtaining **235** reference data **71** based on said vehicle data **50.** The vehicle data **50** may be obtained from different sensors arranged in the vehicle, from the processing unit and/or from an external unit, for example a navigation service. The reference data **71** may be obtained from the processing unit and/or from an external unit.

The method further comprises determining **240** load characterization data **74.** The load characterization data **74** may be based on the determined current rate change **72** and the reference data **50.** In one example, the load characterization data **74** is further based on the vehicle data **50.** In one example, the load characterization data **74** is determined by comparing the change of the current **72** with reference data **71.**

The method further comprises controlling **250** the opening of a switching device **35** of the energy storage system **40.** The control is based on said determined load characterization data **74.** In one example, the controlling of the opening of the switching device **35** includes opening the switching device.

In one example, the method further comprises determining **260** a predicted failure event **78.** The predicted failure event **78** may be determined based on the determined load characterization data **74.**

In one example, the method further comprises opening **270** the switching device **35** upon determining the predicted failure event **78.** The switching device **35** may be opened by opening the opening of the switching device, or in other words: the switching device may be controlled by opening the switching device

**FIG. 7** is a flow chart of a method according to one example. A computer-implemented method is provided. The method comprises obtaining **210,** by processing circuitry of a computer system, amplitude values of electrical current **70** from at least one energy storage system **40** of a vehicle **10,** determining **220,** by the processing circuitry, a rate of change of the current **72** at least based on said values of electrical current **70,** obtaining **230,** by the processing circuitry, vehicle data **50,** and obtaining **235,** by the processing circuitry, reference data **71** based on said vehicle data **50.** The method further comprises determining **240,** by the processing circuitry, load characterization data **74** based on the determined current rate change **72** and the reference data **50,** and controlling **250,** by the processing circuitry, the opening of a switching device **35** of the energy storage system **40** based on said determined load characterization data **74.**

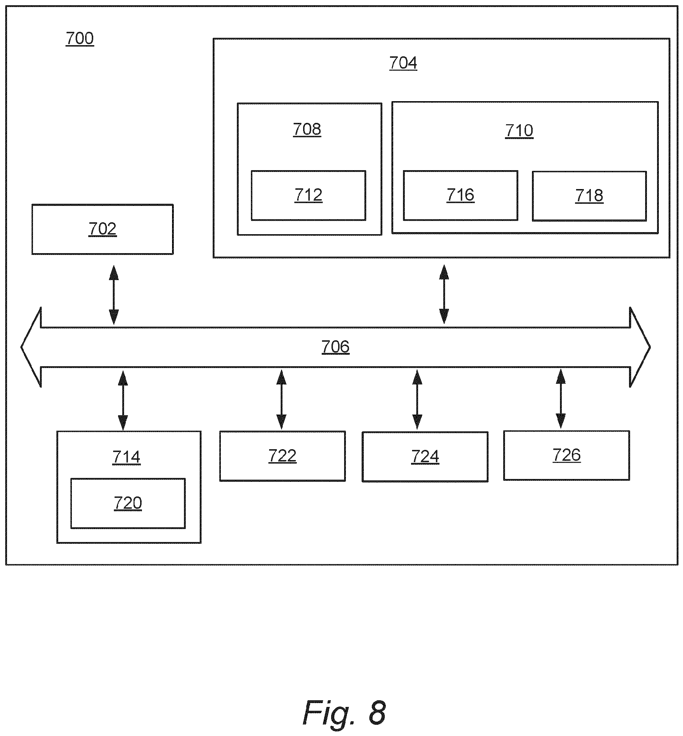

**FIG. 8** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702**to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to obtain amplitude values of electrical current **70** from at least one energy storage system **40** of a vehicle **10,** determine a rate of change of the current **72** at least based on said values of electrical current **70,** obtain vehicle data **50,** obtain reference data **71** based on said vehicle data **50,** determine load characterization data **74** based on the determined current rate change **72** and the reference data **50,** and control the opening of a switching device **35** of the energy storage system **40** based on said determined load characterization data **74.**

Example 2: The computer system of example 1, wherein the processing circuitry is further configured to determine, based on the determined load characterization data **74,** a predicted failure event **78,** and open switching device **35** upon determining the predicted failure event **78.**

Example 3: The computer system of any of examples 1-2, wherein the determination of a rate of change of the current **72** is further based on predictive data.

Example 4: The computer system of any of examples 1-3, wherein the vehicle data **50** comprises a vehicle operation mode **60.**

Example 5: The computer system of example 4, wherein the vehicle operation mode **60** is one of: driving mode **62,** charging mode **64** or preparation mode **66.**

Example 6: The computer system of any of examples 1-5, wherein the vehicle data **50** comprises type of vehicle **10.**

Example 7: The computer system of any of examples 1-6, wherein the vehicle data **50** comprises driving information **56** of the vehicle **10.**

Example 8: The computer system of any of examples 1-7, wherein the processing circuitry is configured to: determine the load characterization data **74** by comparing the change of the current **72** with reference data **71.**

Example 9: The computer system of any of examples 1-8, wherein the amplitude values of electrical current **70** are obtained from at least one high sampling rate current sensor **38.**

Example 10: A vehicle comprising the computer system of any of examples 1-9.

Example 11: The vehicle of example 10, further comprising at least one high sampling rate current sensor **38.**

Example 12: A computer-implemented method, comprising: obtaining **210,** by processing circuitry of a computer system, amplitude values of electrical current **70** from at least one energy storage system **40** of a vehicle **10,** determining **220,** by the processing circuitry, a rate of change of the current **72** at least based on said values of electrical current **70,** obtaining **230,** by the processing circuitry, vehicle data **50,** obtaining **235,** by the processing circuitry, reference data **71** based on said vehicle data **50,** determining **240,** by the processing circuitry, load characterization data **74** based on the determined current rate change **72** and the reference data **50;** and controlling **250,** by the processing circuitry, the opening of a switching device **35** of the energy storage system **40** based on said determined load characterization data **74.**

Example 13: The method of example 12, further comprising determining **260,** based on the determined load characterization data **74,** a predicted failure event **78,** and opening **270** the opening of the switching device **35** upon determining the predicted failure event **78.**

Example 14: A computer program product comprising program code for performing, when executed by the processing circuitry, the method of any of examples 12-13.

Example 15: A non-transitory computer-readable storage medium comprising instructions, which when executed by the processing circuitry, cause the processing circuitry to perform the method of any of examples 12-13.

Example 16: The computer system of any of examples 1-9, wherein the processing circuitry is configured to: continuously update the reference data **71.**

Example 17: The computer system of any of examples 1-9 or 16, wherein the reference data **71** comprises value of electrical current, current rate change and/or amplitude value.

Example 18: The computer system of any of examples 1-9 or 16-17, wherein the reference data **71** comprises statistical and/or historical information.

Example 19: The computer system of any of examples 1-9 or 16-18, wherein the vehicle data **50** comprises one or more of: ambient condition **59,** road information **53,** vehicle information **58,** driving information **56,** time information **57** and charging information **54.**

Example 20: The computer system of any of examples 1-9 or 16-18, wherein the processing circuitry is configured to determine a rate of change of the current **72** when the electrical current is below an overcurrent threshold **OT.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:
obtain amplitude values of electrical current (70) from at least one energy storage system (40) of a vehicle (10),
determine a rate of change of the current (72) at least based on said values of electrical current (70);
obtain vehicle data (50);
obtain reference data (71) based on said vehicle data (50);
determine load characterization data (74) based on the determined current rate change (72) and the reference data (50); and
control the opening of a switching device (35) of the energy storage system (40) based on said determined load characterization data (74).

2. The computer system of claim 1, wherein the processing circuitry is further configured to:
determine, based on the determined load characterization data (74), a predicted failure event (78), and
open the switching device (35) upon determining the predicted failure event (78).

3. The computer system of any of claims 1-2, wherein the determination of a rate of change of the current (72) is further based on predictive data.

4. The computer system of any of claims 1-3, wherein the vehicle data (50) comprises a vehicle operation mode (60).

5. The computer system of claim 4, wherein the vehicle operation mode (60) is one of: driving mode (62), charging mode (64) or preparation mode (66).

6. The computer system of any of claims 1-5, wherein the vehicle data (50) comprises type of vehicle (10).

7. The computer system of any of claims 1-6, wherein the vehicle data (50) comprises driving information (56) of the vehicle (10) and/or road information (53).

8. The computer system of any of claims 1-7, wherein the processing circuitry is configured to:
determine the load characterization data (74) by comparing the change of the current (72) with reference data (71).

9. The computer system of any of claims 1-8, wherein the amplitude values of electrical current (70) are obtained from at least one high sampling rate current sensor (38).

10. A vehicle comprising the computer system of any of claims 1-9.

11. The vehicle of claim 10, further comprising at least one high sampling rate current sensor (38).

12. A computer-implemented method, comprising:
obtaining (210), by processing circuitry of a computer system, amplitude values of electrical current (70) from at least one energy storage system (40) of a vehicle (10);
determining (220), by the processing circuitry, a rate of change of the current (72) at least based on said values of electrical current (70);
obtaining (230), by the processing circuitry, vehicle data (50);
obtaining (235), by the processing circuitry, reference data (71) based on said vehicle data (50);
determining (240), by the processing circuitry, load characterization data (74) based on the determined current rate change (72) and the reference data (50); and
controlling (250), by the processing circuitry, the opening of a switching device (35) of the energy storage system (40) based on said determined load characterization data (74).

13. The method of claim 12, further comprising:
determining (260), based on the determined load characterization data (74), a predicted failure event (78), and
opening (270) the switching device (35) upon determining the predicted failure event (78).

14. A computer program product comprising program code for performing, when executed by the processing circuitry, the method of any of claims 12-13.

15. A non-transitory computer-readable storage medium comprising instructions, which when executed by the processing circuitry, cause the processing circuitry to perform the method of any of claims 12-13.
